# EUROPEAN PATENT SPECIFICATION

(11) **EP 3 818 959 B1**
(45) Date of publication and mention of the grant of the patent: **23.08.2023**
(21) Application number: 19212721.5
(22) Date of filing: 29.11.2019
(51) Int. Cl.: A61C 8/00

(54) **ATTACHMENT MEMBER FOR RETAINING A DENTAL PROSTHESIS ON AN ENDOSSEOUS IMPLANT AND INSTALLATION KIT THEREOF**
BEFESTIGUNGSELEMENT ZUM HALTEN EINER ZAHNPROTHESE AN EINEM ZAHNIMPLANTAT UND INSTALLATIONSKIT DAFÜR
ÉLÉMENT DE FIXATION POUR RETENIR UNE PROTHÈSE DENTAIRE SUR UN IMPLANT ENDO-OSSEUX ET KIT D'INSTALLATION ASSOCIÉ

(30) Priority: 07.11.2019 PT 2019115898
(43) Date of publication of application: 12.05.2021
(73) Proprietor: Celoplas - Plásticos Para A Industria S.A., 4775-127 Grimancelos, Barcelos (PT); GADGETWHISPER, LDA., 4450-007 Matosinhos (PT)
(72) Inventor: De Oliveira Cortez, João, 4760-221 Vila Nova De Famalicão (PT); Rebelo Cortez, Ana Alexandra, 4760-169 Vila Nova de Famalicão (PT); Reis Rodrigues Sampaio, Marcos Cunha, BRAGA (PT); Gobbo, Pietro, 35013 Cittadela Padova (IT)
(74) Representative: Patentree

(56) References cited:
- EP-A2- 3 363 406
- US-A1- 2002 106 610
- US-A1- 2004 209 226

## Description

### TECHNICAL FIELD

The present disclosure relates to an attachment member for retaining a dental prosthesis on an endosseous implant and installation instruments thereof.

### BACKGROUND

The lifestyle of world population is leading to a more worried behaviour regarding people dental health. Because of this trend, people know that sooner or later will face dental problems, including dental loss, which will continue to support the dental industry and market for faster treatment and quality products.

Nowadays, the access to dental treatments for dental loss is very close to the population and in case of that said clinical condition, it is more and more common to perform dental surgery to build a dental prosthesis supported on an endosseous dental implant that is placed on the maxilla and/or mandibular bone. The connection between the prosthesis and said endosseous dental implant is then provided by a dental abutment, where the dental prosthesis will be fixed. These prostheses can whether be fixed or removable. The retention method of the referred dental prosthesis can be screwed, cemented, retained by friction or by attachments. The main disadvantage of the screwed prostheses relies on the esthetical of the screw hole and the need for additional procedures to remove the prosthesis while the cemented and friction retained prosthesis may present less retentive force and higher risk of peri-implantitis disease.

Due to the plurality of dental implants and retention methods, there is a great variety of application instruments, prosthetic parts and long-term protocols that need high skilled professionals on specific products. The more complex is the product, the higher will be the treatment cost and the product cost itself. Typically, a standard product needs several application instruments and procedures to be applied in the patient mouth. Moreover, the traditional protocols consider the need of a provisional abutment during the primary stage to achieve better esthetical results, however this method is costly and takes more time to reach the total satisfaction of the patient.

Document WO2017011741A1 discloses a dental implant assembly. The dental implant assembly includes an implant having a bore within a coronal end, an abutment configured to couple to the implant to the coronal end, a screw configured to secure the abutment to the implant, and a gasket configured to seal an interface between the implant and the abutment. Document WO2017011741A1 however requires gaskets for ensuring sealing of the parts of dental implant.

Document EP3363406A2 discloses a device for installing dental prostheses with implant support in the mouth, comprising an abutment, constituted by a base portion, from which a frustum-shaped portion extends which is, as an alternative, coaxial with respect to the base portion or inclined with respect to it, a sealing and gripping retention element, which is shaped so as to be mounted on the frustum-shaped portion, on the retention element there being at least one first part for snap fixing on the abutment and at least one second part for snap fixing, as an alternative, either to a skirt, which is designed to be incorporated in a dental prosthesis, or directly to a dental prosthesis.

Document US2002/106610A1 discloses an impression cap for taking dental impressions in a patient's mouth comprises a distal end that includes a top surface and a proximal end that defines an opening. The impression cap also includes an inner surface that defines an internal cavity. The proximal end of the impression cap is configured to engage a corresponding shoulder of a prosthetic abutment in a snap fit. The impression cap further comprises an injection port configured to receive a tip of an injection syringe for injecting impression material under into the inner cavity and a plurality vent hole configured to allow air and excess impression material to escape from the inner cavity. Methods of using the impression cap and a dental kit including the impression cap are also disclosed.

Document US2004/209226 discloses a single stage dental implant for implantation in living jawbone having overlying gingiva comprises a generally cylindrical body section having an exterior surface for confronting the jawbone and a head section attached to the body section for extending through the overlying gingiva when the body section is confronting the jawbone. The head section has an end portion which is generally near an outer layer of the gingiva. The implant further includes a bore within the head section extending to an opening at the end portion of the head section. The bore is defined by first, second, and third walls. The first wall has internal threads. The second wall has a larger diameter than the first surface and is substantially cylindrical. The second wall extends from the first wall toward the end portion. The third wall extends from the second wall to the opening and flares toward the opening to a diameter that is wider than a diameter of the second wall. The implant is delivered to the site in the patient's mouth with a carrier that is expanded into the second wall of the bore thereby developing a tight engagement capable of withstanding the insertion torque. The implant can be fitted with posts which extend above the upper portion of the implant. The post can be fitted with gingival forming components and temporary posts.

Taking into account of the prior art disclosures, it would thus be beneficial to provide robust liquid-tight joints, where installation of the disclosed parts is simple and straightforward.

These facts are disclosed in order to illustrate the technical problem addressed by the present disclosure.

### GENERAL DESCRIPTION

The present disclosure relates to an attachment member for retaining a dental prosthesis on an endosseous implant and installation instruments thereof.

Attachment retentive systems that are able to overcome the esthetical and labour disadvantages of screwed, cemented and friction prosthesis, that can be used both on fixed and removable, whether total and partial dental prosthesis supported on endosseous dental implants are advantageous over the prior art disclosure.

The present disclosure solves the complexity problems of the current state of the application instruments, allowing to use the same instruments on traditional transfer techniques and on digital scans in order to obtain the relative position of the prosthesis.

A still further object of this disclosure is to increase the success of the treatment by using the same abutment in provisional and long-term phases.
Another advantage of the disclosure is that a robust liquid-tight joint can be established between the implant and the prosthesis, avoiding food and biological contamination of interior parts and surfaces.

Another advantage of the disclosure is that the installation of the disclosed parts is simple and straightforward.

The present disclosure includes an attachment member for dental prosthesis retention on a dental abutment fastened to an existing endosseous dental implant, as well as an auxiliary application instrument set to fasten the abutments to the said endosseous implant by using a fixation pin, in particular a threaded element, further in particular a screw, and obtain the prosthesis relative position on the human mouth by means of a traditional impression technique or by digital imaging.

The attachment member comprises according to an embodiment:
a dental abutment, fastened to the endosseous dental implant using a fixation pin, in particular being threaded, further in particular a screw;
a retentive set that comprises two parts: an internal retainer and a cap. The internal retainer and the cap are in contact with the abutment on their interior and in contact with the dental prosthesis on their exterior surfaces. The internal retainer mechanically retains the prosthesis to the abutment by pushing the conic internal surfaces of the cap against the conic external surface of the abutment, causing a tight fit, and thus grip, and simultaneously defining the correct position of the internal retainer protrusions of the internal cap on a annular undercut of the abutment.

The same attachment member disclosure can be applied whether on coaxial or angled embodiments.

In a first embodiment, a coaxial abutment is a single assembly that fastens on the endosseous implant by a fixation pin, in particular a threaded element, further in particular a screw, in which the gum transition region is provided by an abutment base.

On a second embodiment, an angled abutment is a single assembly, fixed to the endosseous implant by a fixation pin, in particular a threaded element, further in particular a screw, for angled abutments, which can be used to compensate the lack of parallelism of the implants.

These abutments have geometries and sizes that allow them to be applied as temporary or definitive abutments.

It is described an attachment member for retaining a dental prosthesis on an endosseous dental implant, comprising:
an abutment base;
a dental abutment for fastening into the endosseous dental implant and for retaining the abutment base on the implant;
a cap for enveloping the dental abutment;
an internal retainer for covering a top of the cap;
wherein said cap has a cylindrical or conical shape defining a longitudinal axis and comprises a first inner coupling surface on a first longitudinal end for an adjustment fitting with an outer coupling surface of the abutment base and comprises a second inner coupling surface on a second longitudinal end for an adjustment fitting with an outer coupling surface of the internal retainer;
wherein the internal retainer comprises a snap-fit coupling with the abutment base or with the dental abutment, such that when the internal retainer is snap-fitted and plugged the top of the cap, the cap is kept under pressure between the internal retainer and the abutment base at said coupling surfaces.

The equilibrium of forces of the assembly provides the prothesis retention and the dynamical stability of the assembly, said retention effort being changeable according to the clinical condition, for example by adapting material stiffness and/or thickness.

Said dental abutment comprises a fixation pin for fastening into the endosseous dental implant and for retaining the abutment base on the implant. In particular, the dental abutment may be wholly constituted by a fixation pin, or by a body having a fixation pin and a top part for coupling to the internal retainer. In particular, the fixation pin may be a threaded element, further in particular a screw.

In an embodiment, the cap is configured for enveloping the dental abutment and the abutment base.

In an embodiment, said coupling surfaces are sloping surfaces.

In an embodiment, said coupling surfaces are at least partially conical;
In an embodiment, an envelope formed by the cap together with the internal retainer and the abutment base is liquid-tight.

In an embodiment, the coupling surfaces are complete frustoconical surfaces, such that an envelope formed by the cap together with the internal retainer and the abutment base is liquid-tight.

In an embodiment, the internal retainer comprises a plurality of snap-fit protruding parts terminated with a protrusion for interlocking with a annular undercut in the dental abutment or a annular undercut in the abutment base.

In an embodiment, the dental abutment comprises a top sloping surface for causing elastic deformation of the snap-fit protruding parts as the internal retainer is inserted into the cap.

In an embodiment, the abutment base comprises a top sloping surface for causing elastic deformation of the snap-fit protruding parts as the internal retainer is inserted into the cap.

In an embodiment, the cap further envelopes the snap-fit coupling.

In an embodiment, the cap further envelopes, at least partially, the abutment base.

In an embodiment, the cap further envelopes a join between the abutment base and the dental abutment.

In an embodiment, the dental abutment comprises a protrusion for retaining a bearing surface of the abutment base onto the dental implant.

In an embodiment, the abutment base comprises a bearing surface for being retained by a protrusion of the dental abutment onto the dental implant.

In an embodiment, the cap comprises a annular ledge for retaining the dental prosthesis.

In an embodiment, when the internal retainer and the cap are attached to the dental prosthesis, the retainer and the cap are detachable from the abutment base and the dental abutment, in particular user-detachable from the abutment base and the dental abutment.

In an embodiment, the cap comprises a keyed cap protrusion for keying with a keyed cap recess of the abutment base such that the cap and the abutment base are unable to rotate in respect of each other, in particular said keyed cap protrusion and said keyed cap recess respectively being a vertical protrusion and vertical recess.

In an embodiment, the abutment base comprises a keyed base recess for keying with a keyed top of the endosseous dental implant such that the recess and the endosseous dental implant are unable to rotate in respect of each other.

In an embodiment, the internal retainer comprises a keyed protrusion for keying with a keyed cap recess of the cap such that the internal retainer and the cap are unable to rotate in respect of each other.

In an embodiment, the abutment base is arranged coaxially with the dental abutment, thus forming a coaxial attachment member. In particular, the dental abutment comprises a fixation pin for fastening to the dental implant, further in particular the fixation pin being threaded, further in particular being a fixation screw.

In an alternative embodiment to the previous embodiment, the abutment base is arranged at an angle in respect of the dental abutment, thus forming an angled attachment member, in particular by providing an angled abutment base. In particular, the dental abutment is a fixation pin for fastening to the dental implant, further in particular the fixation pin being threaded, further in particular being a fixation screw.

In an embodiment, the dental abutment or the abutment base has a top recess which comprises an internal thread for receiving a guide pin,
in particular for a coaxial embodiment, the coaxial dental abutment has a top recess which comprises an internal thread for receiving a guide pin, or
in particular for an angled embodiment, the angled abutment base has a top recess which comprises an internal thread for receiving a guide pin.

In an embodiment, the dental abutment has a top recess which comprises a universal drive socket for receiving a universal driver.

In an embodiment, the universal drive socket is placed, in said top recess of the dental abutment, above the internal thread.

Not part of the invention as claimed, it is also described a kit of parts comprising the attachment member according to any of the previous embodiments, a scanabutment for adjusting coaxially against a cylindrical or frustoconical surface, in particular an external surface, of the abutment base, a scanabutment screw for screwing the scanabutment to the dental abutment or to the abutment base.

Also disclosed, but not part of the invention, the scanabutment screw has a screw head which is recessed in a screw housing on the top portion of the scanabutment. This allows an improved image acquisition.

Also disclosed, but not part of the invention, the scanabutment screw has a screw head which has a smooth annular undercut on a top portion of the scanabutment screw for providing a mechanical counter exit for alginate paste deposition.

Also disclosed, but not part of the invention, it is also described a kit of parts comprising a scanabutment for adjusting coaxially against a cylindrical or frustoconical surface, in particular an external surface, of an attachment member, a first scanabutment screw for screwing the scanabutment to the attachment member, a second scanabutment screw for screwing the scanabutment to the attachment member; said attachment member being for retaining a dental prosthesis on an endosseous dental implant;
wherein the first scanabutment screw comprises a screw head;
wherein a top portion of the scanabutment comprises a screw housing recess suitable for housing the screw head of the first scanabutment screw;
wherein the second scanabutment screw comprises a screw head which has a smooth annular undercut on a top portion of the second scanabutment screw for creating a mechanical counter exit for paste deposition.

The kit of parts may comprise the attachment member.

The kit of parts may comprise the attachment member according to any of the disclosed embodiments.

### BRIEF DESCRIPTION OF THE DRAWINGS

The following figures provide preferred embodiments for illustrating the disclosure and should not be seen as limiting the scope of invention.
**Figure 1****:** Schematic representation of a coaxial embodiment with a perspective representation: a coaxial attachment embodiment comprising an abutment base attached by a dental abutment.
**Figure 2****:** Schematic representation of a cross section view of the attachment according to a coaxial embodiment of the disclosure.
**Figure 3****.****1****:** Schematic representation of the abutment base in an embodiment of the disclosure.

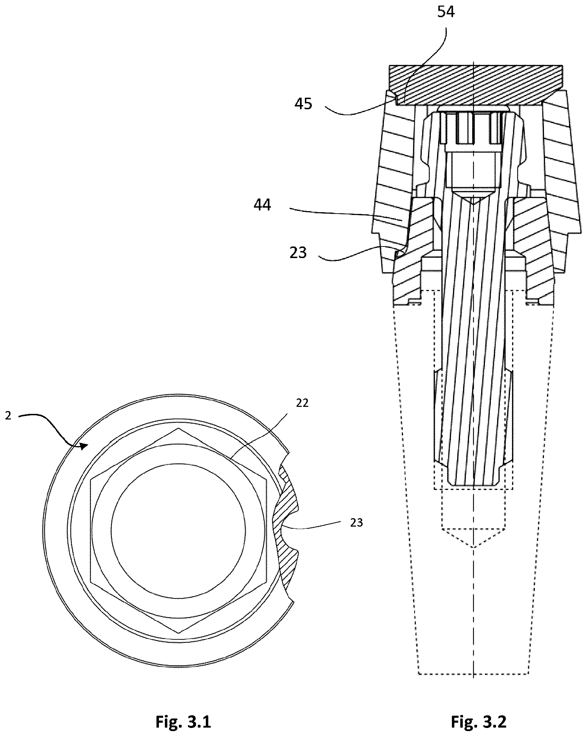

**Figure 3****.****2****:** Schematic representation of a cross section view of the attachment with a keyed cap protrusion of an embodiment of the disclosure.

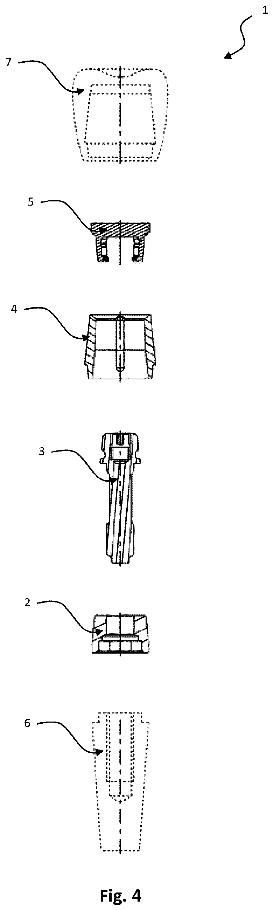

**Figure 4****:** Schematic representation of an embodiment with an exploded representation of the coaxial attachment embodiment and its assembly components.

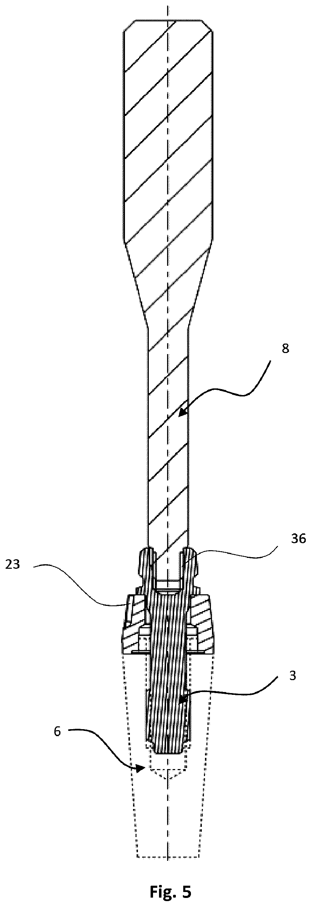

**Figure 5****:** Schematic representation of an embodiment with a cross section view of a guide pin assembly on an internal thread on the top of a coaxial abutment.

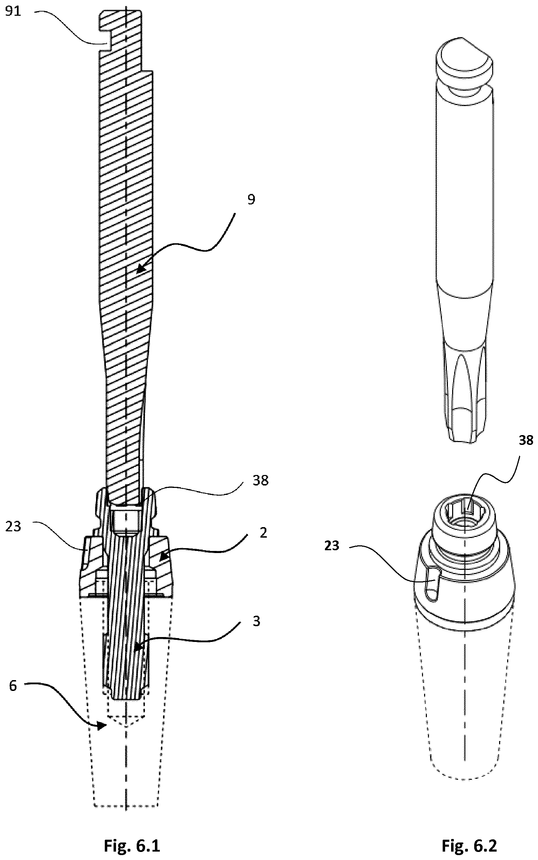

**Figure 6****.****1****:** Schematic representation of an embodiment with a cross section view of a universal driver that fits a universal drive socket on a top portion of the coaxial abutment.
**Figure 6****.****2****:** Schematic representation of an embodiment with a perspective representation of the location of the universal driver socket.

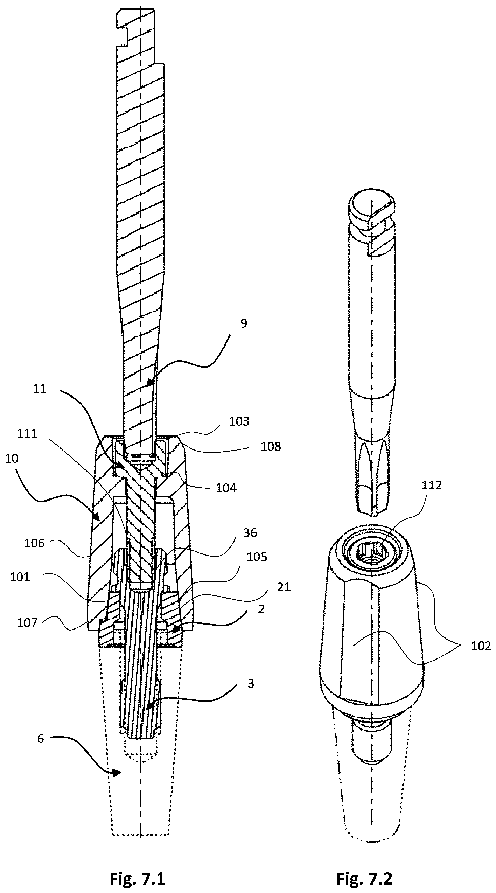

**Figure 7****.****1****:** Schematic representation of a cross section view of a scanabutment function for a digital imaging technique.
**Figure 7****.****2****:** Schematic representation of a perspective representation of the location of a universal driver socket on the top of a scanabutment screw.

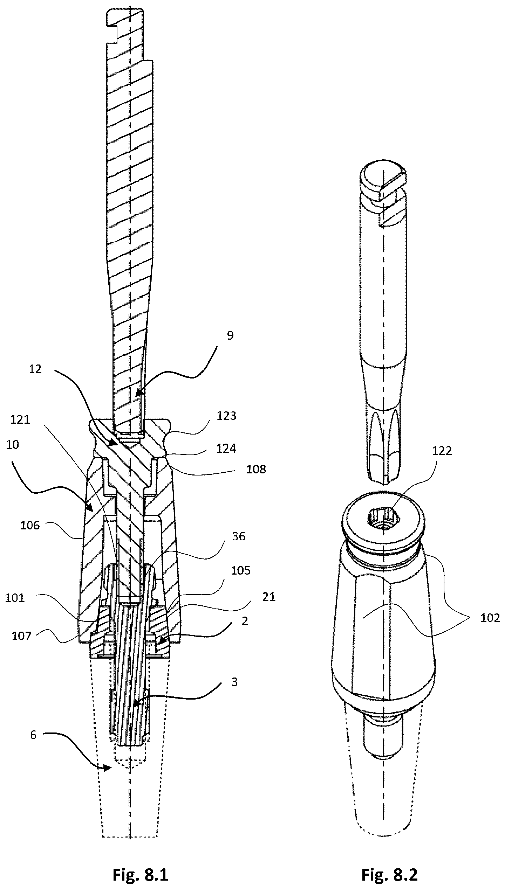

**Figure 8****.****1****:** Schematic representation of a cross section view of a scanabutment function for a traditional moulding transfer technique.
**Figure 8****.****2****:** Schematic representation of a perspective representation of the location of a universal driver socket on the top of a transfer scanabutment screw.

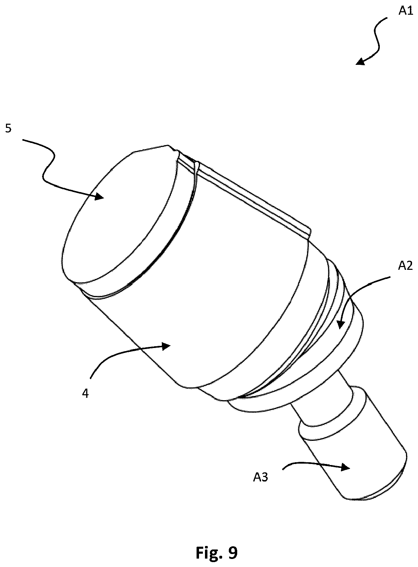

**Figure 9****:** Schematic representation of an angled embodiment with a perspective representation: an angled attachment embodiment comprising an angled abutment attached by a fixation screw.

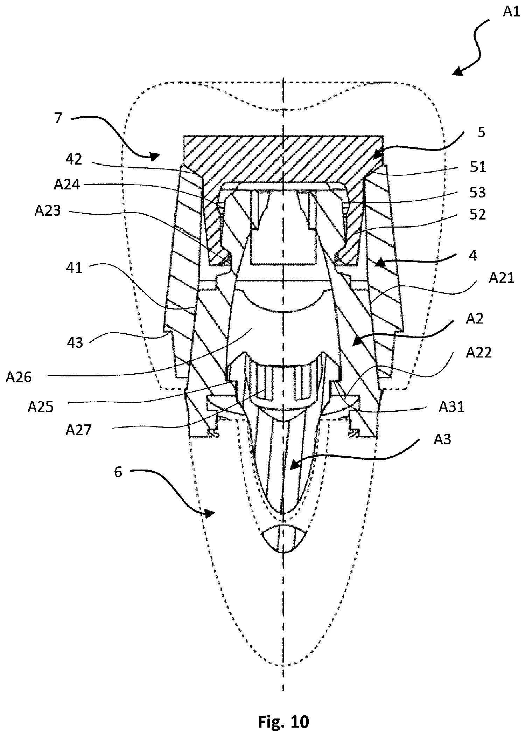

**Figure 10****:** Schematic representation of an embodiment with a cross section view of the attachment embodiment according to the disclosure, where the aforementioned retentive set comprising the cap and the internal retainer can be applied to an angled abutment.

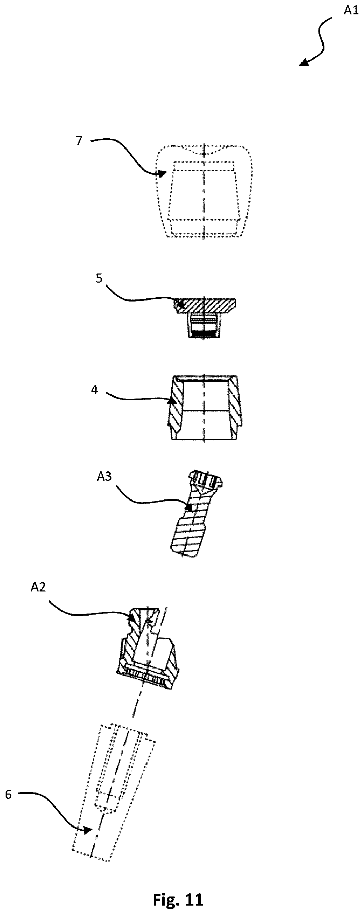

**Figure 11****:** Schematic representation of an embodiment with an exploded representation of an angled attachment embodiment and its assembly components.

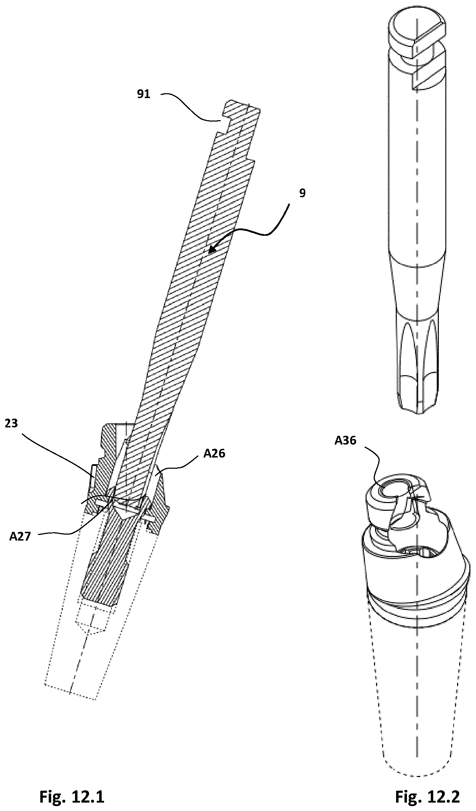

**Figure 12****.****1****:** Schematic representation of an embodiment of a cross section view of a universal driver that fits a fixation screw universal drive socket on the top portion of a fixation screw.
**Figure 12****.****2****:** Schematic representation of an embodiment of a perspective representation of the fitting of the universal driver to an angled embodiment of the disclosure.

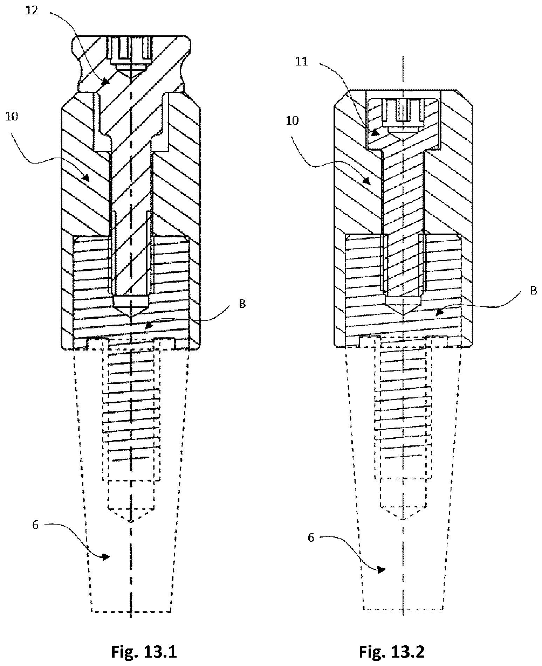

**Figure 13****.****1****:** Schematic representation of a cross-section of a scanabutment and corresponding screw for a traditional moulding transfer technique.
**Figure 13****.****2****:** Schematic representation of a cross-section of a scanabutment and corresponding screw for a digital imaging technique.

### DETAILED DESCRIPTION

As seen above, the present disclosure relates to an attachment member for retaining a dental prosthesis on an endosseous implant and installation instruments thereof.

The attachment member comprises according to an embodiment:
a dental abutment, fastened to the endosseous dental implant using a fixation pin, in particular threaded, further in particular a screw; and
a retentive set that comprises two parts: an internal retainer and a cap. The internal retainer and the cap are in contact with the abutment on their interior and in contact with the dental prosthesis on their exterior surfaces. The internal retainer mechanically retains the prosthesis to the abutment by pushing the conic internal surfaces of the cap against the conic external surface of the abutment, causing a tight fit, and thus grip, and simultaneously defining the correct position of the internal retainer protrusions of the internal cap on the annular undercut of the abutment.

The auxiliary application instrument set, not part of the invention, comprises:
a scanabutment, that can be fastened to the abutment or to the angled abutment, creating a reference position of the existing endosseous implant;
a transfer scanabutment screw, when in another embodiment, the aforementioned scanabutment is intended to be used on the traditional transfer technique using alginate paste in order to obtain the reference position of the existing endosseous implant, for the prosthetics construction;
a scanabutment screw, when in a different embodiment, the aforementioned scanabutment is intended to be used on the digital technique using optical scanner techniques in order to obtain the reference position of the existing endosseous implant;
a single universal driver, with five points, that is used to fasten the coaxial dental abutment to the existing endosseous implant; or to fasten the screw for angled abutments, and thus the angled abutment, to the existing endosseous implant; or to fasten the transfer scanabutment screw, and thus the scanabutment, to the abutment (coaxial or angled); or to fasten the scanabutment screw, and thus scanabutment, to the abutment (Coaxial or angled); and/or
a guide pin, that allows the transport and manipulation of such small parts by the clinical professional.

This disclosed retentive attachment is different from the prior art because the present attachment member embodiments can be applied whether to single or total prosthesis, whether applied on fixed or removable prosthesis.

Another advantage of this disclosure is the fact that regarding its geometry and small size, the abutment can be applied both as temporary or as definitive during the dental treatment, not being necessary to change it after the primary phase of the treatment is finished, whether it is coaxial or angled.

Another advantage of this disclosure is the fact that the attachment member can be applied to most of implant connection types, whether parallelism correction is needed or not.

Another advantage of this disclosure which also distinguishing it from the prior art is the fact that the retentive set does not require the need of a hard-metallic cap between the retentive set and the prosthesis, whether it is totally ceramic, metal-ceramic or metal-acrylic.

Another advantage of this disclosure is that one single driver, geometrically and mechanically optimized, can be applied for several different functions on the same product, which significantly simplifies the procedure and optimizes the costs of the product and the clinical procedure;

Another advantage of this disclosure, not part of the invention, is the possibility to use a scanabutment both for traditional transfer techniques using alginate paste and for digital techniques using optical scanners in order to obtain the reference position of the existing endosseous implant, by simply changing the screw that fastens the scanabutment to the abutment, whether it is coaxial or angled.

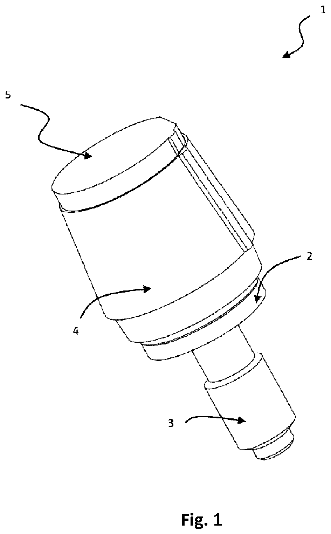

**Figure 1** shows a perspective representation of an embodiment: a coaxial attachment embodiment **1** comprising an abutment base **2** and a coaxial abutment **3.**

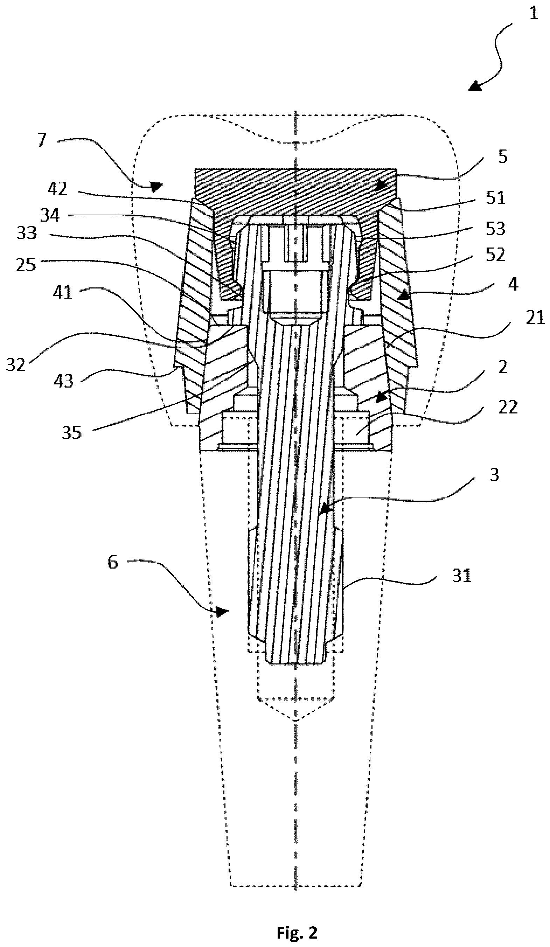

**Figure 2** shows a schematic representation of a cross section view of the attachment according the disclosure in a first embodiment, where: a coaxial attachment embodiment **1,** comprising an abutment base **2** and a coaxial abutment **3,** both coaxial to a longitudinal axis, is fastened to an existing endosseous dental implant **6.** The lower portion of the abutment base **2** includes a keyed recess for coupling to the keyed top of the endosseous dental implant **22,** in case of implant external connection is needed. Still at the lower portion of the coaxial abutment **3,** and also coaxial with the axis, there is a screw thread for endosseous dental implant fixation **31.** The height of the coaxial abutment **3** in relation to the dental implant is defined by the top fitting between the bearing surface **32** and the top surface **25** of the abutment base **2.** A guiding surface **35** at the medium portion of the coaxial abutment **3** helps its assembly through the coaxial abutment base **2.** On top, the retentive set is formed by a cap **4,** where an adjustment sloping surface **41** contacts the external surface of the abutment base **2** on its external sloping surface **21,** and an internal retainer **5,** where two internal retainer protrusions **52** on its bottom portion provide the mechanical keying retention of the set by the fitting between the end surfaces of these protrusions and a correspondent annular undercut **33** on the top of the coaxial abutment **3.** The internal retainer **5** is coupled to the coaxial abutment **3** by elastic deformation along the top sloping surface **34.** The retentive effect is assured by the internal retainer **5** that comprises a snap-fit coupling with the coaxial abutment **3.** The use of adjustment fittings, in particular having double wedged sloping surfaces, together with the snap-fit coupling, provide an enhanced retentive effect. Furthermore, partly or fully conical surfaces provide couplings that are self-aligning. The liquid-tight effect can be assured by couplings that have complete frustoconical surfaces, for example in the accommodation of the cap sloping surface **42** on the correspondent internal retainer sloping surface **51.** The assembly formed by the cap **4** and the internal retainer **5** is directly fixed to the dental prosthesis **7,** where a annular ledge **43** ensures to hold it.

**Figure 3****.****1** shows a bottom representation of the abutment base **2.** The keyed recess for coupling to the keyed top of the endosseous dental implant allows the correct relative position of the coaxial attachment embodiment **1** in relation to the endosseous dental implant **6,** while the angled keyed recess for coupling to the keyed cap recess 23 defines the relative position of the retentive set in the oral cavity.

**Figure 3****.****2** shows a schematic representation of a cross section view of the attachment where the keyed cap protrusion **44** vertically located along the adjustment sloping surface **41,** allows a unique relative placement of the cap **4** along the keyed recess 23 for coupling to the keyed cap protrusion 44. Moreover, the keyed internal retainer protrusion **45** defines the relative position of the internal retainer **5** through the keyed internal retainer protrusion **54.**

**Figure 4** shows an exploded representation of the coaxial attachment embodiment and its assembly components.

**Figure 5** shows a schematic representation of a cross section view of a guide pin **8** assembled on the internal thread **36** on the top of the coaxial abutment **3.** A keyed recess 23 for coupling to the keyed cap protrusion located from the top portion to the medium portion of the abutment base **2** ensures the relative position of the retentive set.

**Figure 6****.****1** shows a schematic representation of a cross section view of a universal driver **9** that fits the universal drive socket **38** on the top portion of the coaxial abutment **3.** The adaptor joint **91** allows the fitting of a standard adaptor on the top portion of the universal driver **9.**

**Figure 6****.****2** shows a perspective representation of the location of the universal driver socket 38.

**Figure 7****.****1** shows a schematic representation of a cross section view of the scanabutment **10** function for the digital technique. The scanabutment **10** is fastened against the external surface of the abutment base **2** by a scanabutment screw **11** and it is placed in the correct position related to the abutments by the keyed scanabutment protrusion **101** that stands across its height. The screw head is recessed on a screw housing **103** located on the top portion of the scanabutment **10** and its vertical position is limited by the screw bearing surface **104.** The position of the scanabutment **10** is limited by its adjustment sloping surface **105** on its lower portion that fits on the correspondent sloping surface **21** on the top portion of the abutment base **2.** The external sloping surface **106** has a tapered geometry across its height to allow image acquisition or the removal of the scanabutment **10** from the alginate paste. Both extremities of the scanabutment **10** present an external base sloping surface **107** and an external top sloping surface **108.** The scanabutment screw **11** fastens the scanabutment **10** on the coaxial abutment **3** or on the angled abutment **A2** by tightening the screw thread for coupling to the coaxial abutment or angled abutment **111,** at its lower portion, on the internal thread of the coaxial abutment **36,** or on the internal thread of the angled abutment **A36,** on its top portion, using the universal driver **9.**

**Figure 7****.****2** shows a perspective representation of the location of the universal driver socket **112** on the top of the scanabutment screw **11.** Two external position surfaces **102** from its top portion up to the medium portion define the relative position of the scanabutment **10** to its main axis.

**Figure 8****.****1** shows a schematic representation of a cross section view of the scanabutment **10** configured for the traditional transfer technique. The scanabutment **10** is fastened against an external frustoconical surface of the abutment base **2** by a transfer scanabutment screw **12** and it is placed in the correct position related to the abutments by the keyed scanabutment protrusion **101.** In this embodiment, the screw head is placed out of the top portion of the scanabutment **10.** Its vertical position is limited by the transfer screw bearing surface **124.** The smooth annular undercut **123** located on the top portion of the transfer scanabutment screw **12** creates a mechanical counter exit for the alginate paste deposition improving its fixation. Again, the position of the scanabutment **10** is limited by its adjustment sloping surface **105** on its lower portion that adjusts on the correspondent sloping surface **21** on the top portion of the abutment base **2.** The external sloping surface **106** presents a tapered geometry across its height to facilitate the removal of the scanabutment **10** from the alginate paste. Both extremities of the scanabutment **10** present an external base sloping surface **107** and an external top sloping surface **108.** The scanabutment screw **12** fastens the scanabutment **10** on the coaxial abutment **3** or angled abutment **A2** by tightening the screw thread for coupling to the coaxial abutment or angled abutment **121,** at its lower portion, on the internal thread of the coaxial abutment **36,** or on the internal thread of the angled abutment **A36,** on its top portion, using the universal driver **9.**

**Figure 8****.****2** shows a perspective representation of the location of the universal driver socket **122** on the top of the transfer scanabutment screw **12.** Two external position surfaces **102** from its top portion up to the medium portion define the relative position of the scanabutment **10** to its main axis.

**Figure 9** shows a perspective representation of another embodiment: an angled attachment embodiment **A1** comprising an angled abutment **A2** attached by a fixation screw **A3.**

**Figure 10** shows a schematic representation of a cross section view of the attachment embodiment according to the disclosure where the aforementioned retentive set comprising the cap **4** and the internal retainer **5** can be applied to the angled abutment **A2,** which is then attached to the endosseous dental implant **6** by a fixation screw **A3** that is aligned to the same axis of the implant. Like on the first embodiment, the assembly formed by the cap **4** and the internal retainer **5** is directly fixed to the dental prosthesis **7,** where a annular ledge **43** helps to grip it. At this embodiment, the upper portion of the abutment is inclined with respect to the bottom portion of the abutment (partially shown), being the said bottom portion coaxial with the axis of the dental implant **7.** The adjustment sloping surface **41** of the cap **4** contacts the angled abutment **A2** on its sloping surface **A21,** while the internal retainer **5** comprising two internal retainer protrusions **52** on its bottom portion provide the mechanical retention of the retentive set by the fitting between these top surfaces of these protrusions and the correspondent annular undercut **A23** on the top portion of the angled abutment **A2.** The internal retainer **5** is introduced in the angled abutment **A2** by elastic deformation along the top sloping surface **A24.** The retentive effect is assured by the internal retainer **5** that comprises a snap-fit coupling with the angled abutment **A2.** The use of adjustment fittings, in particular having double wedged sloping surfaces, together with the snap-fit coupling, provide an enhanced retentive effect. Furthermore, partly or fully conical surfaces provide couplings that are self-aligning. The liquid-tight effect can be assured by couplings that have complete frustoconical surfaces, for example in the accommodation of the cap sloping surface **42** on the correspondent internal retainer sloping surface **51.** The angled abutment **A2** includes a keyed recess for coupling to the keyed top of the endosseous dental implant 6 in case of external connection on the implant is needed. At the lower portion of the angle abutment **A2,** and coaxial with the main axis of the assembly, a fixation screw **A3** is attached to the endosseous dental implant, being its vertical position defined by the fitting between the bearing surface **A25** located on the interior hole **A26** for the fixation screw entrance and the fixation screw adjustment surface **A31.** The fixation screw **A3** is tightened by a universal driver (not shown in this figure) that fits the fixation screw universal drive socket **A27** on its top portion.

**Figure 11** shows an exploded representation of the angled attachment embodiment **A1** and its assembly components. The angled abutment **A2** presents two axes: the main axis which corresponds to the insertion axis of the dental implant **7,** and the secondary axis corresponds to the insertion axis of the dental prosthesis **6** attached to the retentive set formed by the cap **4** and the internal retainer **5.**

**Figure 12****.****1** shows a schematic representation of a cross section view of a universal driver **9** that fits the fixation screw universal drive socket **A27** on the top portion of the fixation screw **A3.** The internal hole **A26** on the angled abutment **A2** allows the deep entrance of the universal driver **9.** The adaptor joint **91** allows the fitting of a standard adaptor on the top portion of the universal driver **9**

**Figure 12****.****2** shows a perspective representation of the fitting of the universal driver the second embodiment of this disclosure.

On another embodiment of this invention, the internal retainer **5** cap may present protrusions on the outer surface of the snaps bodies in order to increase the retention force of the retentive set and thus the prosthesis.

On this disclosure, several embodiments of the attachment member are described, including those described below.

On a first embodiment of this disclosure, a coaxial attachment embodiment **1** comprising a coaxial abutment **3** fastens an abutment base **2** to a previously existing endosseous dental implant **6.** The coaxial abutment **3** can be transported and manipulated by the guide pin **8,** which fastens on the threaded hole on its top portion. This way, the coaxial abutment **3** crosses an internal hole on the abutment base **2,** and its placement is favoured by a small guiding portion on its medium portion, helping the operation of the clinical professional. The tightening is promoted by the screw thread for endosseous dental implant fixation **31** at the lower portion of the coaxial abutment **3,** following standard dimensions compatible with most of the state-of-the-art available dental implants and the standard protocols for screw tightening using the universal driver **9.** On this embodiment, the said screw thread for endosseous dental implant fixation **31** can present an anti-wear coating to avoid wear and further developments of micro-gaps that can cause peri-implant diseases. The universal driver **9** and the universal driver socket **38,** both with 5 grip features, on the top portion of the coaxial abutment **3** are designed to support tightening forces higher than 30ncm⁻¹. Both abutments are made of metallic material, in preference titanium alloy Ti6Al4V, or alternatively made of high-performance polymeric materials, for instance polyetheretherkeone (PEEK), produced by traditional machining techniques or by injection moulding of polymers, ceramics or metals powders. The disclosure includes two separated abutments, as the abutment base **2** can have different heights according the patient needs and different keyed recess for coupling to the keyed top of the endosseous dental implant **22** for the connection with different state of the art implant types.

On a second embodiment of this disclosure, the need to correct the axial degree of the single implants or in case of plurality of it can lead to the use of angled abutments **A2,** wherein its upper portion is inclined with respect to the bottom portion, being the said bottom portion coaxial with the axis of the implant. Depending on the clinical situation, the angled abutment **A2** may vary from 17° to 40° inclination angles. The angled abutment **A2** can be transported and manipulated by the guide pin **8,** similarly to the coaxial abutment **3,** that fastens on the threaded hole on its top portion (not shown). It is fastened on the existing endosseous dental implant **6** by a fixation screw **A3.** This screw position is coaxial with the axis of the endosseous dental implant **6** and its thread follows the state-of-the-art design. On this embodiment, the said fixation screw can present an anti-wear coating to avoid wear and further developments of micro-gaps that can cause peri-implant diseases. The head of the fixation screw **A3** is round designed in order to allow the trajectory entrance to the internal hole **A26** without interference on the top portion of the angled abutment **A2** and maximizing the contact surface between the internal retainer protrusion **52** of the internal retainer **5** and the angled abutment annular undercut **A23.** On this embodiment, the fixation screw **A3** works on every angle degree of the top portion with respect to the bottom portion, from 17° to 40°. The user can tight the fixation screw **A3** with the universal driver **9.** The universal driver **9** and the universal driver socket **38,** both with 5 grip features, on the top portion of the fixation screw **A3** are designed to support tightening forces higher than 30ncm⁻¹, similarly to the coaxial abutment **3** top portion socket.

The retentive set formed by the cap **4** and the internal retainer **5** are attached to the dental prosthesis **7** by means of an acrylic or ceramic adhesive. The retentive set is assembled on the coaxial abutment **2** or on the angled abutment **A2** by applying a compressive force leading to:
- Friction interaction between the external sloping surface of the abutment **21** or **A21** and the adjustment sloping surface **41** on the cap **4,** by the tapered principle fitting;
- Elastic deformation of two internal retainer protrusions **52,** that form a discontinuous annular snap joint, along the top sloping surface at the coaxial abutment **34** or at the angled abutment **A24,** promoted by a brief deflection allowed by the deflection radius **53** along approximately a quarter of the radial perimeter; during the joining operation, the top surface of the referred protrusions reaches the upper surface of the annular undercut **33** on the abutment, creating a permanent tension effect;
- The friction between the external sloping surface of the abutment **21** or **A21** is balanced with a friction and compression effect generated by the internal retainer sloping surface **51** on the cap sloping surface **42;**
- The retention of the dental prosthesis by means of an attachment member is assured, on the stationary state, by the equilibrium of forces.

The cap **4** and the internal retainer **5** are made of polymeric materials, preferably high-performance polymeric materials, like polyetheretherketone (PEEK), with or without additives to improve mechanical performance. On another embodiment of this disclosure, the cap **4** and the internal retainer **5** can also be assembled by means of laser welding in order to simplify manipulation. Nevertheless, this disclosure does not need to use the metallic cap between the retentive set and the dental prosthesis **7.**

The fixation of the dental prosthesis **7** on the retentive set, formed by the cap **4** and the internal retainer **5,** directly attached to the abutment, is possible by using acrylic dental cements or composite curing cements that chemically bond it to the plastic set. This is an advantage for the hole set due to the elastic performance of these adhesives and its sealing effect, during the chewing activity. This disclosure makes possible not to use fixation screws or to cement directly the dental prosthesis **7** on the abutment, which allows to work both with temporary or definitive prosthesis, just by adjusting the retentive force of the device, which can be done only by changing the raw material of the internal retainer **5.** The retentive set relative position to the implant is provided by the keyed recess for coupling to the keyed cap protrusion **23,** on the abutment base **2** or the angled abutment **A2,** that fits the keyed cap protrusion **44** vertically located along the adjustment sloping surface **41** of the cap **4.On** the other hand, the internal retainer **5** also assures the relative position on the cap **4,** providing a correct positioning of the internal retainer protrusions **52** on the annular undercut **33** which is crucial on the angle abutment **A2.** These references are beneficial to the technician that manipulates such small parts on the patient oral cavity.

During the application phase of the abutments on the human mouth the lower portion of the guide pin **8** is screwed on the internal threat **36** of the coaxial abutment **3,** or the angled abutment **A2** (not shown), in order to facilitate the manipulation. The top portion of the guide pin **8** is texturized to increase friction, improving manipulation by the clinician.

The aforementioned universal driver **9** is used to fix the coaxial abutment **3** or the fixation screw **A3** using the binary defined by the state-of-the art clinical protocols. The 5 grip features of the lower portion of the universal driver **5** and the correspondent universal driver socket **38** and **A27** were designed to achieve the best mechanical performance of the fitting set, assuring the correct long-term fixation of the dental prosthesis **7** to the endosseous dental implant **6.** On the top portion of the universal driver **9 an** adaptor joint **91** allows the use of manual or automatic adaptors standardized in the dental sector.

Furthermore, the disclosure, not part of the invention, provides a scanabutment **10** that allows the definition of the relative position of the endosseous dental implant **6** or implants in the oral cavity. It is fixed to the abutment base **2** and the coaxial abutment **3** or the angled abutment **A2** by a scanabutment screw **11,** in case of the digital impression technique is applied. At the lower internal portion of the scanabutment **10,** its adjustment sloping surface **105** contacts to the sloping surface **21** of the abutment base **2.** A contact fitting is created by the scanabutment screw **11,** where the screw thread for scanabutment on coaxial abutment or angles abutment **111** tights the internal threat **36** on the top portion of the coaxial abutment **3** or on the top portion of the angled abutment **A2,** by the use of the universal driver **9** that fits the universal driver socket on the top portion of the abutment screw **11.** The vertical and contact position of the scanabutment is limited by the internal screw bearing surface **104** located on the screw housing **103** on the top portion of the scanabutment **10.** This housing is an important feature once it hides the screw head to improve the image quality during digital impression techniques of the prosthesis construction. The relative position of the implant is made possible due to the keyed scanabutment protrusion **101** that fits the keyed recess for coupling to the keyed cap protrusion **23** on the abutment base **2** or the angled abutment **A2.** The keyed scanabutment protrusion **101** has a predefined position in relation to the two external position surfaces **102** which gives a position reference to the acquired image. An external base sloping surface **107** allow a smooth contact of the component with the biological soft tissues in order to avoid injuries during the impression phase.

Also disclosed but not part of the invention, the same scanabutment **10** can be used to define the relative position of the endosseous implant **6** by fixing it to the abutment base **2** and the coaxial abutment **3** or the angled abutment **A2** using a transfer scanabutment screw **12,** in case the traditional impression technique is used. As previously described, at the lower internal portion of the scanabutment **10,** its adjustment sloping surface **105** contacts with the sloping surface **21** of the abutment base **2.** A contact fitting is created by the scanabutment screw **12,** where the screw thread for transfer scanabutment on coaxial abutment or angles abutment **121** tights the internal threat **36** on the top portion of the coaxial abutment **3** or on the top portion of the angled abutment **A2,** by the use of the universal driver **9** that fits the universal driver socket on the top portion of the transfer abutment screw **12.** The vertical and contact position of the scanabutment is limited by the transfer screw bearing surface **124** located on the top portion of the scanabutment **10,** which is also an important feature to avoid the entrance and further contact of the alginate paste with the abutments when the traditional impression technique is used. As in the previous embodiment, the relative position of the implant is made possible due to the keyed scanabutment protrusion **101** that fits the keyed recess for coupling to the keyed cap protrusion **23** on the abutment base **2 or** the angled abutment **A2.** The keyed scanabutment protrusion **101** has a predetermined position in respect to the two external position surfaces **102** which gives a position reference to the obtained mouth moulds. An external base sloping surface **107** allows a smooth contact of the component with the biological soft tissues in order to avoid injuries during the impression phase. At the top portion of the scanabutment **10** an external top sloping surface **108** provides the geometrical continuity of the lateral geometry of the top portion of the transfer abutment screw **12** and facilitate the technique performance. Still on the top portion of the transfer abutment screw **12,** a smooth annular undercut **123** creates a counter exit for the alginate paste improving its physical fixation on the obtained mould.

**Figure 13****.****1** shows a schematic representation of a cross-section of a scanabutment **10** for adjusting against an external cylindrical surface of an attachment member **B,** the attachment member being suited for retaining a dental prosthesis on an endosseous dental implant, and corresponding transfer screw for a traditional moulding transfer technique **12,** where a smooth annular undercut creates a counter exit for the alginate paste deposition improving its physical fixation on the obtained mould.

**Figure 13****.****2** shows a schematic representation of a cross-section of a scanabutment **10** for adjusting against an external cylindrical surface of the attachment member **B,** and corresponding transfer screw for a digital imaging technique **11,** where a screw head is recessed in a screw housing on the top portion of the scanabutment for improved image acquisition.

As seen above, the disclosure provides practical, effective and low-cost solutions both for digital and traditional impression techniques.

The term "comprising" whenever used in this document is intended to indicate the presence of stated features, integers, steps, components, but not to preclude the presence or addition of one or more other features, integers, steps, components or groups thereof.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

The disclosure should not be seen in any way restricted to the embodiments described and a person with ordinary skill in the art will foresee many possibilities to modifications thereof. The above described embodiments are combinable within the scope of the appended claims.

## Claims

1. An attachment member (1) for retaining a dental prosthesis on an endosseous dental implant (6), comprising:
an abutment base (2, A2);
a dental abutment (3) for fastening into the endosseous dental implant and for retaining the abutment base on the implant;
a cap (4) for enveloping the dental abutment;
an internal retainer (5) for covering a top of the cap;
wherein said cap (4) has a cylindrical or conical shape defining a longitudinal axis and comprises a first inner coupling surface (41) on a first longitudinal end for an adjustment fitting with an outer coupling surface (21, A21) of the abutment base (2, A2) and comprises a second inner coupling surface (42) on a second longitudinal end for an adjustment fitting with an outer coupling surface (51) of the internal retainer (5);
wherein the internal retainer comprises a snap-fit coupling with the abutment base or with the dental abutment, such that when the internal retainer is snap-fitted and plugged into the top of the cap, the cap is kept under pressure between the internal retainer and the abutment base at said coupling surfaces.

2. The attachment member according to the previous claim wherein said coupling surfaces (21, A21, 41, 42, 51) are sloping surfaces.

3. The attachment member according to any of the previous claims wherein said coupling surfaces are at least partially conical.

4. The attachment member according to any of the previous claims, wherein the cap together with the internal retainer and the abutment base form a liquid-tight envelope.

5. The attachment member according to the previous claim wherein the coupling surfaces are complete frustoconical surfaces, such that an envelope formed by the cap together with the internal retainer and the abutment base is liquid-tight.

6. The attachment member according to any of the previous claims wherein the internal retainer (5) comprises a plurality of snap-fit protruding parts terminated with a protrusion (52) for interlocking with a annular undercut (33) in the dental abutment (3) or a annular undercut (A23) in the abutment base (A2);

7. The attachment member according to any of the previous claims wherein the cap further envelopes the snap-fit coupling.

8. The attachment member according to any of the previous claims wherein the cap further envelopes, at least partially, the abutment base.

9. The attachment member according to any of the previous claims wherein the cap further envelopes a join between the abutment base and the dental abutment.

10. The attachment member according to any of the previous claims wherein when the internal retainer and the cap are attached to the dental prosthesis, the retainer and the cap are detachable from the abutment base and the dental abutment, in particular user-detachable from the abutment base and the dental abutment.

11. The attachment member according to any of the previous claims wherein the cap (4) comprises a keyed cap protrusion (44) for keying with a keyed cap recess (23) of the abutment base (2) such that the cap and the abutment base are unable to rotate in respect of each other.

12. The attachment member according to any of the previous claims wherein the abutment base is arranged coaxially with the dental abutment, thus forming a coaxial attachment member.

13. The attachment member according to any of the previous claims wherein the abutment base (A2) is arranged at an angle in respect of the dental abutment, thus forming an angled attachment member.

## Patentansprüche

1. Ein Befestigungselement (1) zum Halten einer Zahnprothese an einem enossalen Zahnimplantat (6), umfassend:
eine Abutmentbasis (2, A2);
ein Zahnabutment (3) zur Befestigung in dem enossalen Zahnimplantat und zum Halten der Abutmentbasis an dem Implantat;
eine Abdeckung (4) zum Umhüllen des Zahnabutments;
eine innere Halterung (5) zum Abdecken des oberen Endes der Abdeckung;
wobei die genannte Abdeckung (4) eine zylindrische oder konische Form hat, die eine Längsachse definiert, und eine erste innere Kopplungsfläche (41) an einem ersten Längsende für ein justierbares Kupplungsstück mit einer äußeren Kopplungsfläche (21, A21) der Abutmentbasis (2, A2) und eine zweite innere Kopplungsfläche (42) an einem zweiten Längsende für ein justierbares Kupplungsstück mit einer äußeren Kopplungsfläche (51) der inneren Halterung (5) umfasst;
wobei die innere Halterung eine Schnappverbindung mit der Abutmentbasis oder mit dem Zahnabutment umfasst, so dass, wenn die innere Halterung eingerastet und in den oberen Teil der Abdeckung eingesteckt ist, die Abdeckung zwischen der inneren Halterung und der Abutmentbasis an den genannten Kopplungsflächen unter Druck gehalten wird.

2. Das Befestigungselement nach dem vorangehenden Anspruch, wobei die genannten Kopplungsflächen (21, A21, 41, 42, 51) geneigte Flächen sind.

3. Das Befestigungselement nach einem der vorangehenden Ansprüche, wobei die genannten Kopplungsflächen zumindest teilweise konisch sind.

4. Das Befestigungselement nach einem der vorangehenden Ansprüche, wobei die Abdeckung zusammen mit der inneren Halterung und der Abutmentbasis eine flüssigkeitsdichte Umhüllung bilden.

5. Das Befestigungselement nach dem vorangehenden Anspruch, wobei die Kopplungsflächen vollständig kegelstumpfförmige Flächen sind, so dass eine von der Abdeckung zusammen mit der inneren Halterung und der Abutmentbasis gebildete Umhüllung flüssigkeitsdicht ist.

6. Das Befestigungselement nach einem der vorangehenden Ansprüche, wobei die innere Halterung (5) eine Vielzahl von vorstehenden Teilen einer Schnappverbindung umfasst, die mit einem Vorsprung (52) zur Verriegelung mit einer ringförmigen Kerbe (33) in dem Zahnabutment (3) oder einer ringförmigen Kerbe (A23) in der Abutmentbasis (A2) enden.

7. Das Befestigungselement nach einem der vorangehenden Ansprüche, wobei die Abdeckung außerdem die Schnappverbindung umhüllt.

8. Das Befestigungselement nach einem der vorangehenden Ansprüche, wobei die Abdeckung außerdem zumindest teilweise die Abutmentbasis umhüllt.

9. Das Befestigungselement nach einem der vorangehenden Ansprüche, wobei die Abdeckung außerdem eine Verbindung zwischen der Abutmentbasis und dem Zahnabutment umhüllt.

10. Das Befestigungselement nach einem der vorangehenden Ansprüche, wobei, wenn die innere Halterung und die Abdeckung an der Zahnprothese befestigt sind, die Halterung und die Abdeckung von der Abutmentbasis und dem Zahnabutment abnehmbar sind, insbesondere durch den Benutzer von der Abutmentbasis und dem Zahnabutment abnehmbar sind.

11. Das Befestigungselement nach einem der vorangehenden Ansprüche, wobei die Abdeckung (4) einen formschlüssigen Vorsprung an der Abdeckung (44) für den formschlüssigen Abschluss mit einer formschlüssigen Aussparung an der Abdeckung (23) der Abutmentbasis (2) umfasst, so dass sich die Abdeckung und die Abutmentbasis nicht in Bezug zueinander drehen können.

12. Das Befestigungselement nach einem der vorangehenden Ansprüche, wobei die Abutmentbasis koaxial mit dem Zahnabutment angeordnet ist und somit ein koaxiales Befestigungselement bildet.

13. Das Befestigungselement nach einem der vorangehenden Ansprüche, wobei die Abutmentbasis (A2) in einem Winkel zu dem Zahnabutment angeordnet ist und somit ein abgewinkeltes Befestigungselement bildet.

## Revendications

1. Un élément de fixation (1) pour retenir une prothèse dentaire sur un implant dentaire endo-osseux (6), comprenant :
une base de pilier (2, A2) ;
un pilier dentaire (3) pour fixer à l'implant dentaire endo-osseux et pour retenir la base de pilier sur l'implant ;
un capuchon (4) pour envelopper le pilier dentaire ;
un élément de retenue interne (5) pour couvrir une partie supérieure du capuchon ;
dans lequel ledit capuchon (4) a une forme conique ou cylindrique définissant un axe longitudinal et comprend une première surface d'accouplement interne (41) sur une première extrémité longitudinale pour un ajustement à une surface d'accouplement externe (21, A21) de la base de pilier (2, A2) et comprend une seconde surface d'accouplement interne (42) sur une seconde extrémité longitudinale pour un ajustement à une surface d'accouplement externe (51) du élément de retenue interne (5) ;
dans lequel le élément de retenue interne comprend un raccord encliquetable avec la base de pilier ou avec le pilier dentaire, tel que lorsque le élément de retenue interne est encliqueté et raccordé à la partie supérieure du capuchon, le capuchon reste sous pression entre le élément de retenue interne et la base de pilier sur lesdites surfaces d'accouplement.

2. L'élément de fixation selon la revendication précédente, dans lequel lesdites surfaces d'accouplement (21, A21, 41, 42, 51) sont des surfaces inclinées.

3. L'élément de fixation selon l'une quelconque des revendications précédentes, dans lequel lesdites surfaces d'accouplement sont au moins partiellement coniques.

4. L'élément de fixation selon l'une quelconque des revendications précédentes, dans lequel le capuchon conjointement avec le élément de retenue interne et la base de pilier forment une enveloppe étanche aux liquides.

5. L'élément de fixation selon la revendication précédente dans lequel les surfaces d'accouplement sont des surfaces tronconiques complètes, telles qu'une enveloppe formée par le capuchon conjointement avec le élément de retenue interne et la base de pilier soit étanche aux liquides.

6. L'élément de fixation selon l'une quelconque des revendications précédentes, dans lequel le élément de retenue interne (5) comprend une pluralité de parties saillantes encliquetables qui se terminent par une protrusion (52) pour se verouiller à une contre-dépouille annulaire (33) dans le pilier dentaire (3) ou à une contre-dépouille annulaire (A23) dans la base de pilier (A2).

7. L'élément de fixation selon l'une quelconque des revendications précédentes, dans lequel le capuchon enveloppe également l'accouplement encliquetable.

8. L'élément de fixation selon l'une quelconque des revendications précédentes, dans lequel le capuchon enveloppe également, au moins partiellement, la base de pilier.

9. L'élément de fixation selon l'une quelconque des revendications précédentes, dans lequel le capuchon enveloppe également un joint entre la base de pilier et le pilier dentaire.

10. L'élément de fixation selon l'une quelconque des revendications précédentes, dans lequel, lorsque le élément de retenue interne et le capuchon sont fixés à la prothèse dentaire, le élément de retenue et le capuchon sont détachables de la base de pilier et du pilier dentaire, en particulier détachable de la base de pilier et du pilier dentaire par l'utilisateur.

11. L'élément de fixation selon l'une quelconque des revendications précédentes, dans lequel le capuchon (4) comprend une protrusion de capuchon à verrouillage (44) pour se verouiller à une cavité de capuchon à verrouillage (23) de la base de pilier (2) tel que le capuchon et la base de pilier ne puissent pas pivoter l'un par rapport à l'autre.

12. L'élément de fixation selon l'une quelconque des revendications précédentes, dans lequel la base de pilier est arrangée de manière coaxiale avec le pilier dentaire, formant ainsi un élément de fixation coaxial.

13. L'élément de fixation selon l'une quelconque des revendications précédentes, dans lequel la base de pilier (A2) est arrangée à un angle par rapport au pilier dentaire, formant ainsi un élément de fixation à angle.
